# EUROPEAN PATENT APPLICATION

(11) **EP 4 538 864 A1**
(43) Date of publication of application: **16.04.2025**
(21) Application number: 24206038.2
(22) Date of filing: 11.10.2024
(51) Int. Cl.: G06F 8/61, G06F 9/455

(54) **MANAGEMENT OF VIRTUAL MACHINE IMAGES**

(30) Priority: 13.10.2023 US 202318487007
(71) Applicant: VMware LLC, Palo Alto, CA 94304 (US)
(72) Inventor: Wang, Dongfeng, Palo Alto, 94304 (US); Saxena, Pawan, Palo Alto, 94304 (US); Cherukupalli, Ravi Kant, Palo Alto, 94304 (US); Kamat, Amita Vasudev, Palo Alto, 94304 (US); Shetty, Akshay, Palo Alto, 94304 (US); Zhao, Haiyan, London, EC1V 9NR (GB)
(74) Representative: Dilg, Haeusler, Schindelmann Patentanwaltsgesellschaft mbH

(57) **Abstract**

A method of managing a virtual machine (VM) image for deployment of the VM across a plurality of software-defined data centers (SDDCs) includes the steps of: separately uploading parts of the VM image to a cloud storage, forming a complete image of the VM from the separately uploaded parts of the VM image, and downloading from the cloud storage the complete VM image to each of the SDDCs in which the VM is to be deployed.

## Description

### BACKGROUND

In a software-defined data center (SDDC), virtual infrastructure, which includes virtual machines (VMs) and virtualized storage and networking resources, is provisioned from hardware infrastructure that includes a plurality of host computers (hereinafter also referred to simply as "hosts"), storage devices, and networking devices. The provisioning of the virtual infrastructure is carried out by SDDC management software that is deployed on management appliances, such as a VMware vCenter Server^{®} appliance and a VMware NSX^{®} appliance, from VMware, Inc. The SDDC management software communicates with virtualization software (e.g., a hypervisor) installed in the hosts to manage the virtual infrastructure.

To deploy workloads on VMs, users may create a single VM and install an operating system (OS). In addition, they may employ an OVF (Open Virtualization Format) image, an OVA (Open Virtualization Appliance) image, or an ISO (International Standard Organization) image to deploy a preconfigured virtual machine. Storing and managing VM images, such as OVF, OVA, or ISO images, are challenging since they are usually very large in size. For users who are deploying SDDCs in different physical data centers which may be located across different geographical regions, the conventional solution is difficult to scale.

### SUMMARY

A method of managing a VM image for deployment of the VM across a plurality of SDDCs, according to an embodiment, includes the steps of: separately uploading parts of the VM image to a cloud storage, forming a complete image of the VM from the separately uploaded parts of the VM image, and downloading from the cloud storage the complete VM image to each of the SDDCs in which the VM is to be deployed.

Further embodiments include a non-transitory computer-readable storage medium comprising instructions that cause a computer system to carry out the above method, as well as a computer system configured to carry out the above method.

### BRIEF DESCRIPTION OF THE DRAWINGS

Figure 1 is a conceptual block diagram of a customer environment in which an SDDC is provisioned and a cloud platform that manages images of virtual machines deployed in the SDDC, according to embodiments.
Figure 2 is a conceptual block diagram of SDDCs that are deployed in two different geographical regions.
Figure 3 is a diagram that depicts a flow of commands and responses during image management according to embodiments.
Figure 4 is a flow diagram that depicts the steps of uploading a VM image in parts according to embodiments.
Figure 5 is a flow diagram that depicts the steps carried out by an image service to upload a partial VM image to a cloud storage according to embodiments.

### DETAILED DESCRIPTION

One or embodiments provide a cloud-based VM image management solution that is scalable and applicable to SDDCs provisioned in different physical data centers that are located across different geographical regions. The solution also enables users to directly deploy VMs from the cloud into different SDDCs without separately logging into management consoles for the different SDDCs. As used herein, an SDDC refers to a data center in which the infrastructure is virtualized and includes a plurality of VMs, a virtual storage, and a virtual network by which the VMs communicate with each other and with the virtual storage.

According to one or more embodiments, the VM images are uploaded once to a cloud storage that has replicas (also implemented as cloud storage) in different geographical regions so that the download of the VM images, which are very large in size (e.g., on the order of GBs or even TBs), to different SDDCs can be carried out from the cloud storage or any of its replicas. Because of its size, the VM images are uploaded to the cloud storage using a multi-part image copy process. Further, during the process of uploading the VM images to the cloud storage, metadata are collected for each of the VM images and stored in a database for querying. The VM image metadata includes version number, name, description, size, type, timestamp, and the type of information included in the image metadata that is saved as part of the OVF or OVA image, such as CPU, memory, storage, and network resources that are required to run the corresponding VM. As used herein, a cloud storage is a storage device that is accessible through a cloud platform and typically offered as a service. An important feature of cloud storage is that its size can be expanded on-demand to meet the storage requirements of the user.

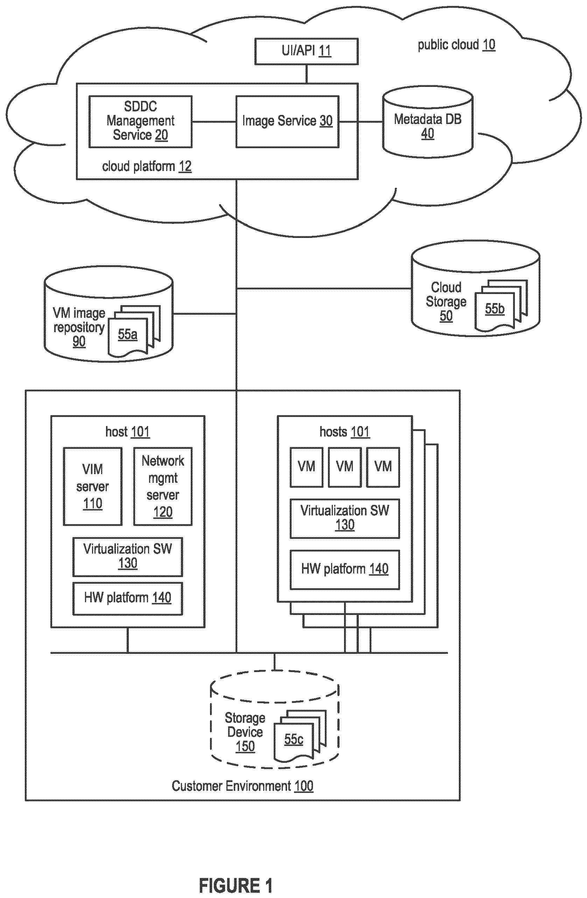

Figure 1 is a conceptual block diagram of a customer environment 100, in which an SDDC is provisioned, and a cloud platform 12, which is implemented in a public cloud 10, that manages VMs deployed in the SDDC, according to embodiments. A user interface (UI) or an application programming interface (API) of cloud platform 12 is depicted in Figure 1 as UI/API 11. As used herein, a "customer environment" means one or more private data centers managed by the customer, which is commonly referred to as "on-prem," a private cloud managed by the customer, a public cloud managed for the customer by another organization, or any combination of these.

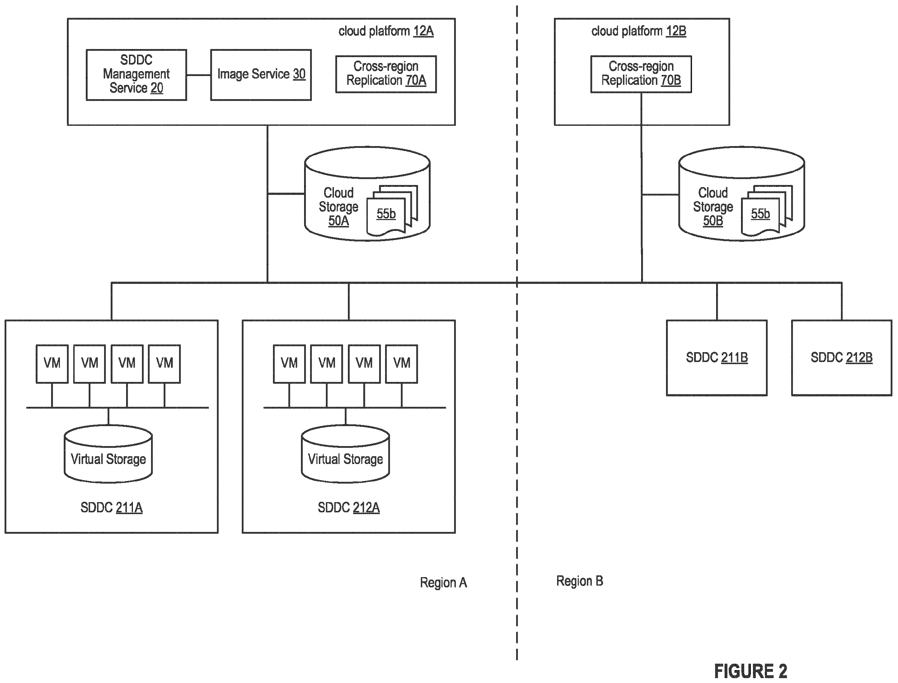

In the embodiments described herein, SDDCs (depicted as SDDC 211A, SDDC 212A, SDDC 211B, and SDDC 212B in Figure 2) are provisioned in customer environments that are located in different geographical regions. The different geographical regions are depicted in Figure 2 as Region A and Region B, where Region A is located, for example, on the eastern region of the United States and Region B is located, for example, on the western region of the United States. One or more SDDCs may be provisioned from hardware resources of a particular customer environment, and customer environment 100 depicted in Figure 1 is illustrative of the customer environments described herein.

Customer environment 100 includes a plurality of hosts 101 connected to each other via a network (e.g., local area network) and each of hosts 101 includes a hardware platform 140, a virtualization software 130 (e.g., hypervisor) running on top of hardware platform 140 to provide an execution environment within which multiple VMs are concurrently instantiated and executed. In this manner, virtualization software 130 abstracts the VMs from physical hardware while enabling the VMs to share the physical resources of hardware platform 140. As a result of this abstraction, each VM operates as though it has its own dedicated computing resources.

In one of hosts 101, the VMs include a virtual infrastructure manager (VIM) server 110 and a network management server 120 for managing one or more SDDCs provisioned in customer environment 100. One or more storage devices are also provided in the customer environment. In one embodiment, these storage devices are local storage devices of the hosts that are aggregated and provisioned as a virtual storage area network (VSAN) storage device. This storage device is depicted in Figure 1 as storage device 150 in dashed lines. Alternatively, storage device 150 may be implemented as a physical storage device (e.g., storage array) connected to a storage area network of hosts 101, or a physical storage device (e.g., storage array) connected to the local area network of hosts 101 as network-attached storage.

The deployment of VMs in the SDDCs provisioned in the customer environments is initiated by the user (e.g., the customer) directly interacting with SDDC management service 20 through UI/API 11 or by a script executed on the user's computing device that calls APIs of SDDC management service 20 through UI/API 11. VMs may also be deployed as part of a scale-out process automatically carried out by SDDC management service 20 when it detects that additional VMs are needed to support the execution of applications.

VMs are deployed from their images, which are stored in a VM image repository 90 when they become production-ready. In the embodiments, in response to commands directly entered by user through UI/API 11 or by a script executed on the user's computing device that calls APIs of image service 30 through UI/API 11, image service 30 uploads the production-ready images to cloud storage 50. The production-ready images stored in VM image repository 90 are depicted as VM images 55a in Figure 1 and the VM images uploaded to cloud storage 50 are depicted as VM images 55b in Figure 1. Then, in response to commands or API calls to deploy VMs, image service 30 downloads the corresponding VM images to the storage devices of the individual SDDCs in which the VMs are to be deployed. The VM images downloaded to the storage devices of the individual SDDCs are depicted as VM images 55c.

Cloud storage (e.g., cloud storage 50) is used in the embodiments because its capacity is typically larger than the capacity of the storage devices in the SDDCs and can be more easily expanded than the capacity of the storage devices in the SDDCs. As a result, cloud storage 50 can store all of the VM images of VMs that are to be deployed whereas the storage devices in the SDDCs only store temporarily VM images of those VMs that are being deployed. In addition, cloud storage 50 is auto-replicated across its replicas. Therefore, VM images of VMs that are to be deployed in a particular SDDC can be downloaded from any one of cloud storage 50 and its replicas. One of cloud storage 50 and its replicas is selected as the source for the download based on a predetermined criteria, e.g., closest to the particular SDDC, has the highest bandwidth connection to the particular SDDC, is the least busy, etc.

In the embodiments, the software components of cloud platform 12, including SDDC management service 20, image service 30, and cross-region replication service 70A and 70B (described below), are each a microservice that is implemented as a container image executed on a virtual infrastructure of public cloud 10. In addition, the network connection between cloud platform 12 and each of the customer environments may be via a public network, e.g., the Internet, or via a software-defined wide area network (SD-WAN).

Figure 2 is a conceptual block diagram of SDDCs that are provisioned in two different geographical regions. SDDC 211A and SDDC 212A are provisioned in one or more customer environments in Region A, whereas SDDC 211B and SDDC 212B are provisioned in one or more customer environments in Region B. In the embodiments, any number of SDDCs may be provisioned in each region. In addition, multiple SDDCs may be provisioned in one customer environment, and one SDDC may be provisioned across multiple customer environments. As depicted in Figure 2, the virtual infrastructure of each SDDC includes a plurality of VMs, a virtual storage, and a virtual network by which the VMs communicate with each other and with the virtual storage.

A replica of cloud storage 50 is provided for each region. In the example illustrated in Figure 2, cloud storage 50A is provided for region A and cloud storage 50B is provided for region B. The contents of cloud storage 50A are replicated in cloud storage 50B by cross-region replication service 70A running in cloud platform 12A communicating with cross region replication 70B running in cloud platform 12B. In a similar manner, if contents of cloud storage 50B is updated, the updates will be replicated in cloud storage 50A. In the example illustrated in Figure 2, only two regions are depicted for simplicity. It should be understood that there may be more than two regions, with a replica of cloud storage 50 provided in each region. Cloud storage 50 may be implemented in the manner described in U.S. Patent No. 7,716,180, the entire contents of which are incorporated by reference herein.

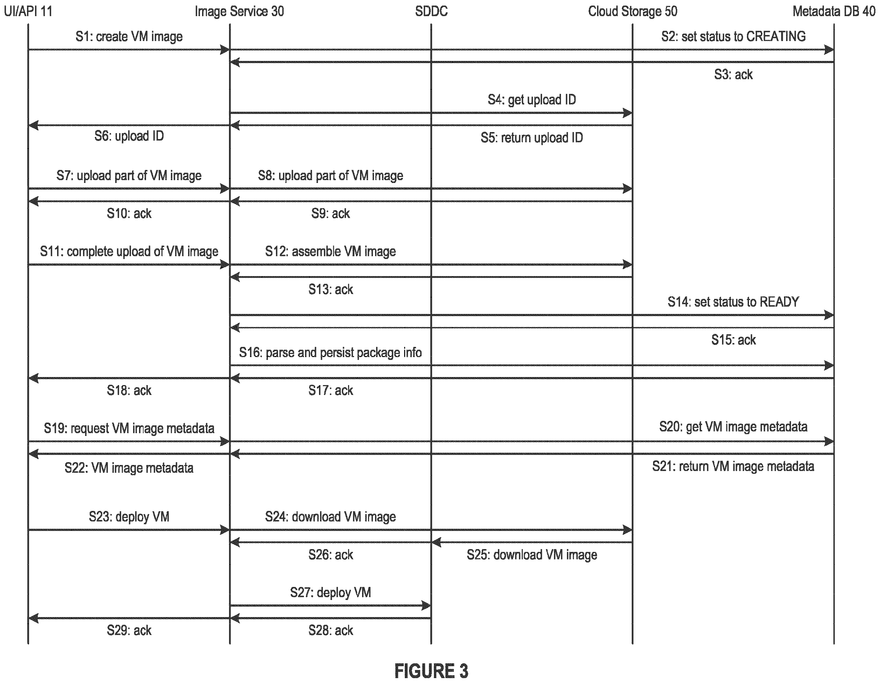

Figure 3 is a diagram that depicts a flow of commands and responses during image management according to embodiments. In the embodiments illustrated herein, steps S1, S7, and S11 are API calls made by a script executing on a computing device of a user (e.g., SDDC administrator) who is accessing cloud platform 12, and steps S19 and S23 are commands directly entered by the user through UI/API 11. In some embodiments, steps S19 and S23 are API calls made by SDDC management service 20.

Step S1 is an API call to create a VM image in cloud storage 50 so that contents of the VM image stored in VM image repository 90 can be uploaded to cloud storage 50. This API call includes a parameter that specifies the location of the VM image in image repository 90 (e.g., by its URL). In response to this API call, image service 30 at step S2 creates an entry for a new VM image in metadata database 40 and sets the status of this new VM image to CREATING. Then, in response to receiving an ack from metadata database 40 at step S3, image service 30 requests cloud storage 50 to get an upload ID for the new VM image. Step S4 is an API call made by image service 30 to cloud storage 50 to "get upload ID" and step S5 is the response to that API call. In the response, cloud storage 50 returns the upload ID to image service 30. Then, at step S6, image service 30 responds to the API call of step S1 by returning the upload ID to UI/API 11.

Step S7 is an API call to upload a part of the VM image to cloud storage 50. The VM image is identified by the upload ID returned at step S6 and the part is identified by a part ID that is assigned by the script executing on the computing device of the user. In response to this API call, image service 30 at step S8 makes an API call to image repository 90 to execute a process of copying the contents of the part of the VM image from image repository 90 to cloud storage 50. When the contents of the part of the VM image are successfully written into cloud storage 50, cloud storage 50 at step S9 returns an ack and in response thereto image service 30 at step S10 returns an ack to UI/API 11.

Step S11 is an API call to complete the upload of the VM image. This API call is made by the script executing on the computing device of the user when all parts of the VM image have been uploaded to cloud storage 50. In response to this API call, image service 30 at step S12 makes an API call to cloud storage 50 to assemble the uploaded parts of the VM image into one complete VM image. When cloud storage 50 has finished assembling, it issues an ack at step S13. In response to the ack at step S13, image service 30 instructs metadata database 40 to set the status of the new VM image to READY. Upon receiving an ack from metadata database 40 at step S15, image service 30 at step S16 parses the package information specified in the VM image and persists the package information in metadata database 40 as part of the VM image metadata. The VM image metadata includes version number, name, description, size, type, timestamp, and minimum resource requirements (CPU, memory, storage, and network) for running the VM. Then, in response to receiving an ack from metadata database 40 at step S17, image service 30 returns an ack to UI/API 11 at step S18 as a response to the API call made at step S11.

Step S19 is a command to query a VM image that is specified as a parameter of the command. In response to this command, image service 30 at step S20 queries metadata database 40 for the VM image metadata. At step S21, metadata database 40 returns the VM image metadata as a response to the query. Then, at step S22, image service 30 returns the VM image metadata as a response to the request at step S19.

Step S23 is a command to deploy a VM. The command includes as parameters, the VM ID and the SDDC in which the VM is to be deployed. In response to this command, image service 30 at step S24 makes an API call to cloud storage 50 to download the VM image of the VM to be deployed, to the virtual storage of the SDDC. When the download completes, SDDC issues an ack at step S26. In response to this ack, image service 30 at step S27 makes an API call to the virtual infrastructure manager (e.g., VIM 110) of the SDDC to deploy the VM using the downloaded VM image. When the VM has been deployed, SDDC issues an ack at step S28 and in response thereto image service 30 at step S29 returns an ack to UI/API 11.

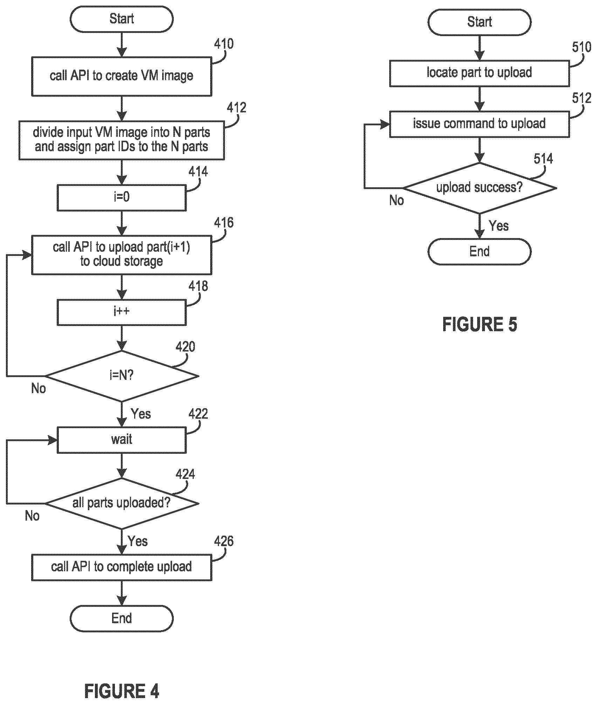

Figure 4 is a flow diagram that depicts the steps of uploading a VM image from VM image repository 90 to cloud storage 50 in parts according to embodiments. These steps are carried out, for example, when the above-mentioned script is executed on the computing device of the user who is accessing cloud platform 12 through UI/API 11. Steps 410, 416, and 426 correspond respectively to API calls made in steps S1, S7, and S11. At step 412, the script divides the VM image into N parts (e.g., where each part has a size of 50 MB) and assigns unique part ID to each of the N parts. The variable i is initialized at step 414 and incremented at step 418. The script executes step 416 for each of the N parts until the value of i equals N as determined at step 420. As a result, multiple threads are executed concurrently to separately upload respective parts of the VM image to cloud storage 50.

At step 422, the script waits for a predetermined amount of time before checking at step 424 to see if all parts of the VM image have been uploaded to cloud storage 50. The condition of step 424 is met if all ack's are received in response to the N API calls made at step 416. If all ack's are received, the script continues onto step 426, where the script makes the API call to complete the VM image upload. Otherwise, the script returns to step 422 to wait the predetermined amount of time before performing the check at step 424.

Figure 5 is a flow diagram that depicts the steps carried out by image service 30 to upload a partial VM image to cloud storage 50 according to embodiments. These steps are carried out by image service 30 in response to the API call made at step S7 in Figure 3 and step 416 in Figure 4. At step 510, image service 30 locates the part to upload. The part to upload is identified by the part ID and the location of the part ID is the storage location of this part within VM image repository 90. At step 512, image service 30 makes an API call to image repository 90 to execute a process of copying the contents of the part of the VM image from image repository 90 to cloud storage 50. At step 514, image service 30 checks to see if the upload is successful. The condition of step 514 is met if an ack is received within a timeout period, from VM image repository 90 in response to the API call made at step 512. If the ack is not received within the timeout period, step 512 is executed once again.

In the embodiments, because the VM image is uploaded in parts, when the upload is not successful, e.g., as a result of loss of network connection, upload is reattempted for only the part that failed to upload successfully. For a large image, such as VM images that are on the order of GBs and even TB in size, significant efficiency gains are achieved as a result of dividing the VM image into N parts and performing uploads at the granularity of the parts instead of the granularity of the entire image.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

One or more embodiments of the present invention may be implemented as one or more computer programs or as one or more computer program modules embodied in computer readable media. The terms computer readable medium or non-transitory computer readable medium refer to any data storage device that can store data which can thereafter be input to a computer system. Computer readable media may be based on any existing or subsequently developed technology that embodies computer programs in a manner that enables a computer to read the programs. Examples of computer readable media are hard drives, NAS systems, read-only memory (ROM), RAM, compact disks (CDs), digital versatile disks (DVDs), magnetic tapes, and other optical and non-optical data storage devices. A computer readable medium can also be distributed over a network-coupled computer system so that the computer readable code is stored and executed in a distributed fashion.

Certain embodiments as described above involve a hardware abstraction layer on top of a host computer. The hardware abstraction layer allows multiple contexts to share the hardware resource. These contexts can be isolated from each other, each having at least a user application running therein. The hardware abstraction layer thus provides benefits of resource isolation and allocation among the contexts. Virtual machines may be used as an example for the contexts and hypervisors may be used as an example for the hardware abstraction layer. In general, each virtual machine includes a guest operating system in which at least one application runs. It should be noted that, unless otherwise stated, one or more of these embodiments may also apply to other examples of contexts, such as containers. Containers implement operating system-level virtualization, wherein an abstraction layer is provided on top of a kernel of an operating system on a host computer or a kernel of a guest operating system of a VM. The abstraction layer supports multiple containers each including an application and its dependencies. Each container runs as an isolated process in user-space on the underlying operating system and shares the kernel with other containers. The container relies on the kernel's functionality to make use of resource isolation (CPU, memory, block I/O, network, etc.) and separate namespaces and to completely isolate the application's view of the operating environments. By using containers, resources can be isolated, services restricted, and processes provisioned to have a private view of the operating system with their own process ID space, file system structure, and network interfaces. Multiple containers can share the same kernel, but each container can be constrained to only use a defined amount of resources such as CPU, memory and I/O.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific configurations. Other allocations of functionality are envisioned and may fall within the scope of the appended claims. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. A method of managing an image of a virtual machine (VM) for deployment across a plurality of software-defined data centers (SDDCs), said method comprising:
separately uploading parts of the image to a cloud storage;
forming a complete image of the VM from the separately uploaded parts of the image; and
downloading from the cloud storage the complete image of the VM to each of the SDDCs in which the VM is to be deployed.

2. The method of claim 1, wherein
the parts of the image are uploaded from a repository for VM images to the cloud storage.

3. The method of claim 2, wherein
multiple threads are executed concurrently to separately upload respective parts of the image to the cloud storage.

4. The method of any one of the claims 1 to 3, wherein
the SDDCs in which the VM is to be deployed include a first SDDC that is provisioned in a first data center to which the complete image of the VM is downloaded from the cloud storage and a second SDDC that is provisioned in a second data center to which the complete image of the VM is downloaded from the cloud storage.

5. The method of any one of the claims 1 to 4, wherein
the cloud storage is located in a first data center and contents of the cloud storage are auto-replicated to a replica cloud storage that is located in a second data center, and
the SDDCs in which the VM is to be deployed include a first SDDC to which the complete image of the VM is downloaded from the cloud storage in the first data center and a second SDDC to which the complete image of the VM is downloaded from the replica cloud storage in the second data center.

6. The method of any one of the claims 1 to 5, further comprising:
extracting metadata of the VM from the complete image of the VM and storing the metadata of the VM in a database that contains metadata of all VMs that have a complete image thereof stored in the cloud storage.

7. The method of claim 6, wherein
the metadata of the VM includes a version number of the image of the VM, and resource requirements for running the VM.

8. The method of any one of the claims 1 to 7, wherein
the image of the VM is packaged as an open virtualization format (OVF) image, an open virtualization appliance (OVA) image, or an international standard organization (ISO) image.

9. A non-transitory computer readable medium comprising instructions to be executed in a computer system to carry out a method as set forth in any one of the preceding claims.

10. A cloud platform for managing an image of a virtual machine (VM) for deployment across a plurality of software-defined data centers (SDDCs), wherein the cloud platform includes a processor that is programmed to carry out the steps of:
separately uploading parts of the image to a cloud storage;
forming a complete image of the VM from the separately uploaded parts of the image; and
downloading from the cloud storage the complete image of the VM to each of the SDDCs in which the VM is to be deployed.

11. The cloud platform of claim 10, wherein
the parts of the image are uploaded from a repository for VM images to the cloud storage.

12. The cloud platform of claim 11, wherein
multiple threads are executed concurrently to separately upload respective parts of the image to the cloud storage.

13. The cloud platform of any one of the claims 10 to 12, wherein the steps further comprise:
extracting metadata of the VM from the complete image of the VM and storing the metadata of the VM in a database that contains metadata of all VMs that have a complete image thereof stored in the cloud storage.

14. The cloud platform of claim 13, wherein
the metadata of the VM includes a version number of the image of the VM, and resource requirements for running the VM.
